# EUROPEAN PATENT APPLICATION

(11) **EP 3 893 481 A1**
(43) Date of publication of application: **13.10.2021**
(21) Application number: 19893387.1
(22) Date of filing: 18.11.2019
(51) Int. Cl.: H04N 5/225, B60R 11/02, G01C 3/06, G02B 7/02, G03B 15/00, G03B 17/55, G03B 35/08

(54) **STEREO CAMERA**

(30) Priority: 05.12.2018 JP 2018228245
(71) Applicant: Hitachi Astemo, Ltd., Hitachinaka-shi, Ibaraki 312-8503 (JP)
(72) Inventor: HAGA, Takeshi, Hitachinaka-shi Ibaraki 312-8503 (JP)
(74) Representative: MERH-IP Matias Erny Reichl Hoffmann Patentanwälte PartG mbB
(86) International application number: PCT/JP2019/045007
(87) International publication number: WO 2020/116136

(57) **Abstract**

Provided is a stereo camera having an improved heat dissipation efficiency. A stereo camera according to the present invention provided with: a plurality of image capture units; a casing in which the plurality of image capture units are contained; and a circuit board on which electronic components are implemented, wherein the stereo camera is characterized in that: the casing has a seating part connected with a heat dissipation part; the seating part has an end surface opposite to the heat dissipation part; the end surface is a surface parallel to an up-and-down direction; and an implementation surface of the circuit board on which the electronic components are implemented is a surface parallel to the up-and-down direction.

## Description

### Technical Field

The present invention relates to a stereo camera.

### Background Art

A stereo camera that is an in-vehicle image-capturing device identifies a horizontal displacement (parallax) with respect to an object projected on a pair of images captured by a pair of image-capturing units, and can measure the distance to the object using the principle of triangulation based on the identified parallax.

The stereo camera also has a function of distinguishing whether the object captured on the image is a vehicle, a pedestrian, or something else based on the shape and size of the object in addition to identifying the distance.

In general, such a stereo camera system is equipped with a dedicated large scale integration (LSI) that performs processing of identifying pixel positions of feature points common to a pair of captured images from pixel information included in the pair of captured images and performs processing of obtaining the number of pixels (hereinafter referred to as parallax) whose feature points are displaced from each other in the pair of captured images. The stereo camera includes the pair of image-capturing units and the LSI as well as a circuit board equipped with a power supply circuit for driving them. For this reason, it is conceivable that the stereo camera becomes hot due to heat reception from insolation and self-heating of each circuit.

In order to prevent a temperature of the equipped element from exceeding a heat resistant temperature, it is common for the circuit board in the stereo camera to perform a control of restricting or shutting down the function of the stereo camera when the temperature sensor detects that the temperature of the circuit board has reached a predetermined temperature.

In in-vehicle systems, frequent functional restriction and shutdown lead to impairment in merchantability. Therefore, appropriate heat dissipation of the circuit board in the stereo camera is necessary. There are in-vehicle systems that use cooling fans. However, highly efficient natural cooling by the stereo camera housing is required from the points of view of miniaturization, cost reduction, and high reliability.

International Publication No. 2017/163584 discloses a stereo camera having heat dissipation structures that dissipate heat toward the lens.

### Citation List

### Patent Literature

PTL 1: WO2017/163584

### Summary of Invention

### Technical Problem

However, in the stereo camera described in International Publication No. 2017/163584, there was room for improvement in heat dissipation efficiency.

The present invention has been made to solve such a problem, and a main object of the present invention is to provide a stereo camera having improved heat dissipation efficiency.

### Solution to Problem

In order to solve the above-mentioned problems, the present invention is a stereo camera including a plurality of image-capturing units, a housing that accommodates the plurality of image-capturing units, and a circuit board mounted with an electronic component, and the housing has a seat continuous to a heat dissipation unit, the seat has an end face on the side opposite to the side of the heat dissipation unit, the end face is a plane parallel to the upward-downward direction, and a mounting surface of the circuit board mounted with the electronic component is a plane parallel to the upward-downward direction.

### Advantageous Effects of Invention

According to the present invention, it is possible to provide a stereo camera with improved heat dissipation efficiency.

Problems, structure, operations, and effects of the present invention other than those described above will be clarified by the following description of the embodiments.

### Brief Description of Drawings

[FIG. 1] FIG. 1 is an exploded perspective view of a stereo camera according to an embodiment of the present invention as viewed from the front side.
[FIG. 2] FIG. 2 is a rear view of the stereo camera according to an embodiment of the present invention.
[FIG. 3] FIG. 3 is an exploded perspective view of the stereo camera according to an embodiment of the present invention as viewed from the rear side.
[FIG. 4] FIG. 4 is a plan view of the stereo camera according to an embodiment of the present invention as viewed from above.
[FIG. 5] FIG. 5 is a plan sectional view of the stereo camera of FIG. 4 taken along a plane orthogonal to the upward-downward direction.
[FIG. 6] FIG. 6 is a right-side sectional view of the stereo camera according to an embodiment of the present invention as viewed from the side of a held portion.
[FIG. 7] FIG. 7 is a side view showing an example of the positional relationship between the windshield of a vehicle and the stereo camera.
[FIG. 8] FIG. 8 is a side view showing an example of the positional relationship between the windshield of a vehicle and the stereo camera other than FIG. 7.

### Description of Embodiments

An embodiment of the present invention will be described in detail below with reference to the drawings, but the present invention is not limited to the following embodiment, and various modifications and applications are included in the scope of technical concept of the present invention. The terms orthogonal and parallel not only refer to perfectly orthogonal and perfectly parallel but also allow displacement within, for example, 45 degrees from perfectly orthogonal and perfectly parallel. In the present embodiment, the upward-downward, frontward-backward, and rightward-leftward arrows shown in each figure indicate the direction of each figure.

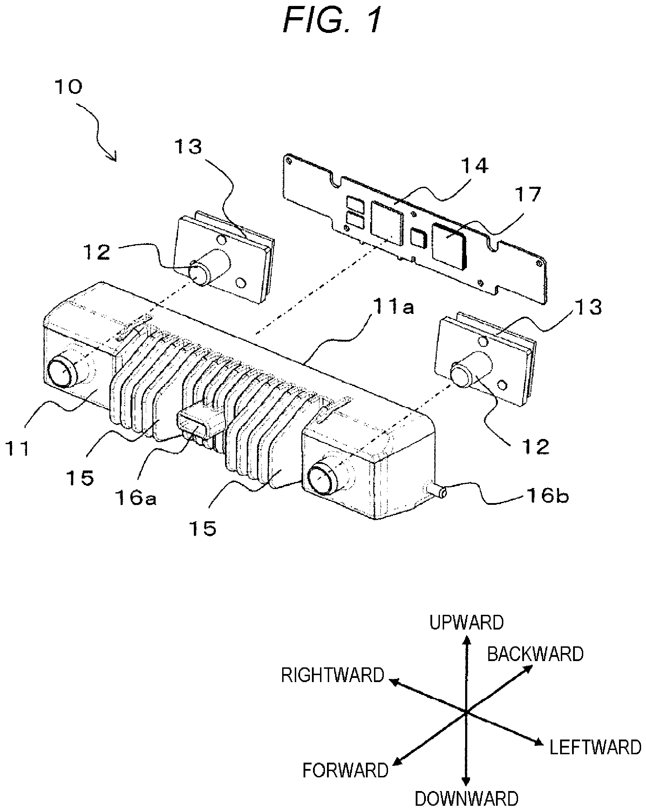

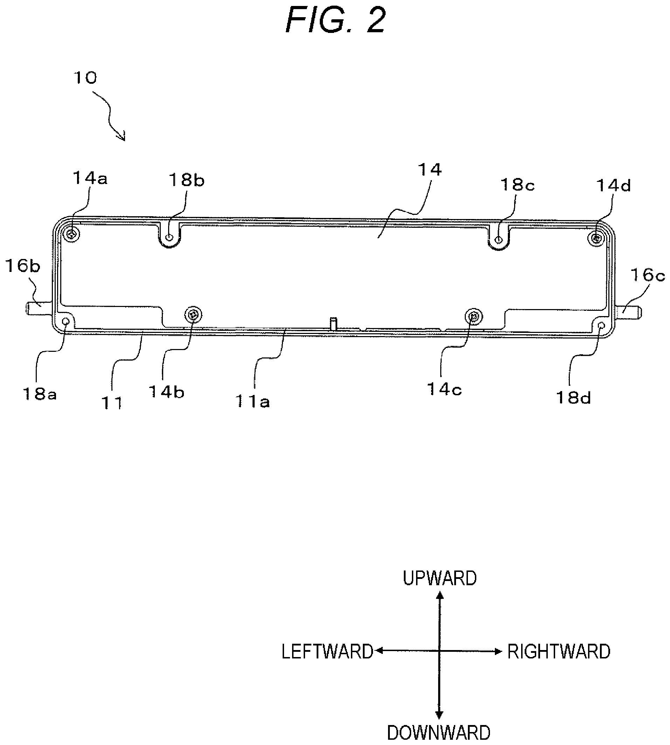

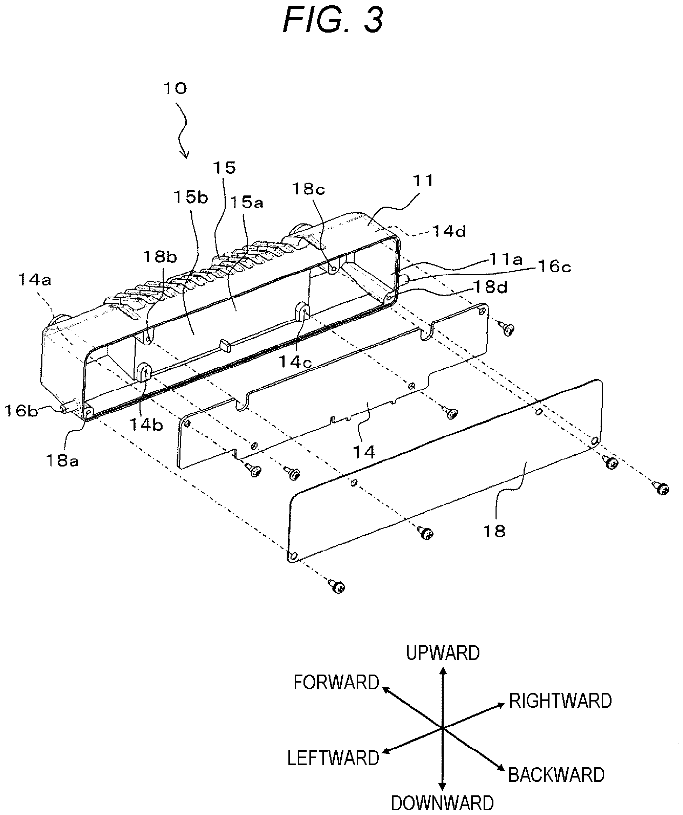

FIG. 1 is an exploded perspective view of a stereo camera 10 according to an embodiment of the present invention as viewed from the front side. FIG. 2 is a rear view of the stereo camera 10 according to an embodiment of the present invention. FIG. 3 is an exploded perspective view of the stereo camera 10 according to an embodiment of the present invention as viewed from the rear side. In the perspective view of FIG. 1 and the rear view of FIG. 2, illustration of a cover 18 on the rear surface (back side) is omitted. The stereo camera 10 of the present embodiment is attached to a windshield of a vehicle and captures an image in the travel direction. In the present embodiment, the travel direction of the vehicle is called forward direction, and the direction opposite to the travel direction is called backward direction. The vertical direction is called upward-downward direction. The right-hand direction when facing forward is called rightward direction, and the left-hand direction is called leftward direction.

The stereo camera 10 includes: a housing 11 made of, for example, aluminum die cast; a pair of lenses 12 arranged on both right and left sides of the housing 11; a pair of right and left image-capturing elements 13 arranged behind the pair of respective lenses 12 and capturing an image formed via the lenses 12; a circuit board 14 mounted with an electronic component 17 that realizes the function of the stereo camera 10; and the cover 18 that closes an opening 11a of the housing 11. The cover 18 has a flat plate shape, with which the mounting workability is improved.

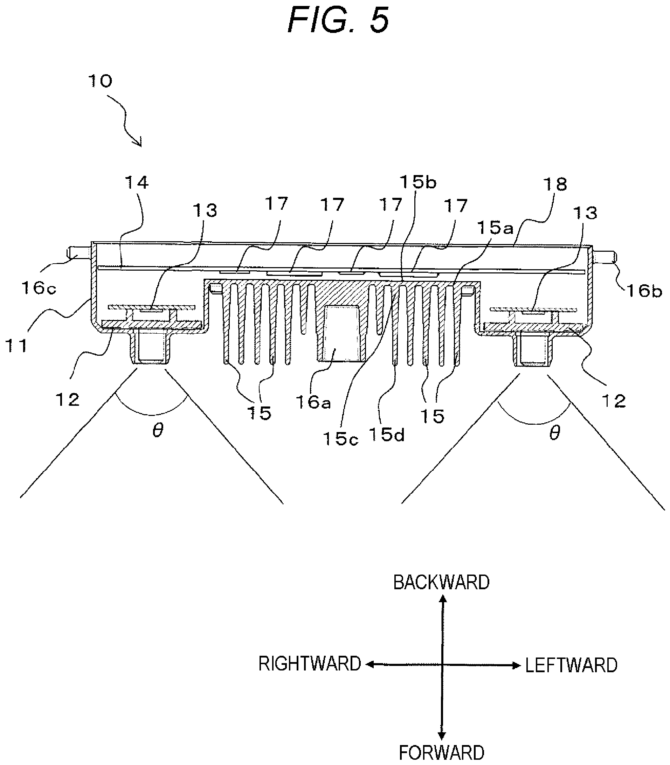

The housing 11 has a plurality of fins 15 that are a heat dissipation unit. The housing 11 has a heat dissipation unit, and the shape of the heat dissipation unit is not limited to a fin shape, and may be any known shape. The housing 11 has a seat 15a, which is a plate-like portion extending in a direction parallel to the upward-downward direction and parallel to the rightward-leftward direction. The seat 15a is continuous to an end 15c (described later in FIG. 5), which is an end on the rear side (root side) of the plurality of fins 15. The seat 15a has an end face 15b, which is an end face on the rear side. The end face 15b is a plane (plane orthogonal to the forward-backward direction) parallel to the upward-downward direction and parallel to the rightward-leftward direction. The plurality of fins 15 and the seat 15a constitute a heat dissipation structure. Each of the plurality of fins 15 is a plate-like portion extending in a direction parallel to the upward-downward direction and parallel to the forward-backward direction, and the end 15c is continuous to the seat 15a. The end 15c extends in the upward-downward direction. The plurality of fins 15 and the seat 15a are integrated with the housing 11, and the plurality of fins 15 and the seat 15a are also made of aluminum die cast.

The plurality of fins 15 are arranged at predetermined intervals in the rightward-leftward direction. The intervals between the plurality of fins 15 are provided in the upward-downward direction, where convection is generated by the airflow flowing in the intervals between the plurality of fins 15, and heat dissipation efficiency of the fins 15 can be improved. The intervals between the plurality of fins 15 are set to an appropriate value having good heat dissipation efficiency.

The housing 11 has a held portion 16a at the center of the plurality of fins 15 in front in the forward-backward direction, and held portions 16b and 16c at both ends in the rightward-leftward direction. These held portions 16a, 16b, and 16c are held by a holding portion of a holder attached to the windshield, whereby the stereo camera 10 is held by the holder in a three-point support. The positions of the held portions 16a, 16b, and 16c are not limited to the positions shown in the figure, and instead of the held portion 16a, the fin 15 may be provided at the position of the held portion 16a.

The housing 11 has the opening 11a at the rear, and the lens 12, the image-capturing element 13, and the circuit board 14 are accommodated in the housing 11 through the opening 11a. The opening 11a of the housing 11 is closed from the rear by the cover 18 with the lens 12, the image-capturing element 13, and the circuit board 14 accommodated in the housing 11. The lens 12 is arranged so that its optical axis is in a direction parallel to the forward-backward direction. The stereo camera 10 is provided with a pair of combinations of the lens 12 and the image-capturing element 13, but the present invention is not limited thereto, and the stereo camera 10 may be provided with three or more combinations of the lens 12 and the image-capturing element 13.

As shown in FIG. 2, the circuit board 14 is fixed to the housing 11 by fixing portions 14a, 14b, 14c, and 14d. The fixing portions 14a, 14b, 14c, and 14d are composed of screw holes provided in the housing 11 and screws penetrating the circuit board 14 and screwed into the screw holes of the housing 11. As shown in FIG. 2, the cover 18 is fixed to the housing 11 by fixing portions 18a, 18b, 18c, and 18d. The fixing portions 18a, 18b, 18c, and 18d are composed of screw holes provided in the housing 11 and screws penetrating the cover 18 and screwed into the screw holes of the housing 11.

The circuit board 14 is mounted with the electronic component 17. The electronic component 17 generates self-heat by operating on supplied electric power. The mounting surface of the circuit board 14 mounted with the electronic component 17 is a plane parallel to the upward-downward direction and parallel to the rightward-leftward direction. The circuit board 14 may be arranged at a position where the mounting surface faces the end face 15b of the seat 15a. The circuit board 14 may be arranged at a position where the back surface of the mounting surface faces the end face 15b of the seat 15a. By thus arranging the circuit board 14, the size of the stereo camera 10 in the forward-backward direction can be reduced compared with the case where the circuit board 14 is arranged so that its mounting surface becomes parallel to the forward-backward direction. By thus arranging the circuit board 14, the electronic component 17 mounted on the circuit board 14 can be brought close to the end face 15b of the seat 15a. Thus, heat generated by the electronic component 17 can be efficiently transferred to the seat 15a, and heat can be efficiently dissipated by the plurality of fins 15 continuous to the seat 15a.

When the stereo camera 10 is viewed from the rear side, the fixing portions 14a, 14b, 14c, and 14d and the fixing portions 18a, 18b, 18c, and 18d are alternately arranged. With this arrangement, the fixing portions 14a, 14b, 14c, and 14d and the fixing portions 18a, 18b, 18c, and 18d can fix, to the housing 11, the circuit board 14 and the cover 18 without overlapping each other in the forward-backward direction. Therefore, it is possible to reduce the size of the stereo camera 10 in the forward-backward direction. By fixing the circuit board 14 to the housing 11 with the fixing portions 14a, 14b, 14c, and 14d, the circuit board 14 can be arranged so that the mounting surface of the circuit board 14 becomes parallel to the upward-downward direction and parallel to the rightward-leftward direction.

By arranging the circuit board 14 so that the mounting surface of the circuit board 14 becomes parallel to the upward-downward direction and parallel to the rightward-leftward direction, it is possible to enhance the strength against bending of the stereo camera 10 in the upward-downward direction.

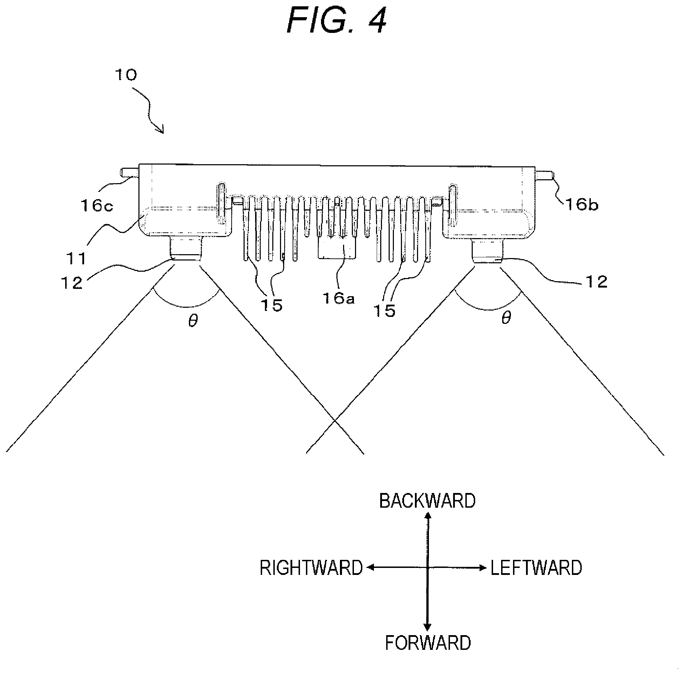

FIG. 4 is a plan view of the stereo camera 10 according to an embodiment of the present invention as viewed from above. FIG. 5 is a plan sectional view of the stereo camera 10 of FIG. 4 taken along a plane orthogonal to the upward-downward direction. The rightward-leftward width of an end 15d, which is an end of the front side (tip side) of each of the plurality of fins 15, is narrower than the rightward-leftward width of the end 15c. This causes the connection area of the end 15c with the seat 15a to increase to improve the efficiency of heat transfer, and causes the distance between the end 15d and the adjacent fin 15 to increase to expand the convection region and improve the heat dissipation efficiency.

In FIGS. 4 and 5, θ represents the angle of view of the lens 12. The fins 15 are arranged at positions not overlapping the angle θ of view. For example, in the forward-backward direction, the front tip of the lens 12 is positioned at the same position as the front tip of the fins 15. For example, in the forward-backward direction, the front tip of the lens 12 is positioned in the front direction relative to the front tip of the fins 15.

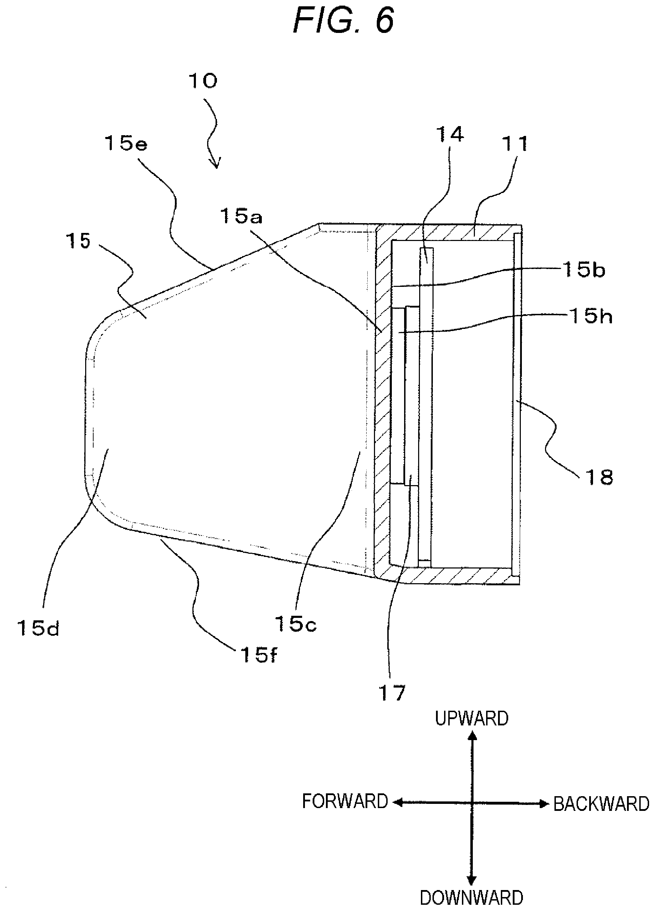

FIG. 6 is a right-side sectional view of the stereo camera 10 according to an embodiment of the present invention as viewed from the side of the held portion 16b. In the present embodiment, the circuit board 14 is arranged at a position where the mounting surface of the circuit board 14 is orthogonal to the forward-backward direction, and the end face 15b of the seat 15a is a plane orthogonal to the forward-backward direction. Therefore, the mounting surface of the circuit board 14 and the end face 15b of the seat 15a are arranged in parallel. Thus, as compared with the case where the mounting surface of the circuit board 14 and the end face 15b of the seat 15a are not in parallel, the electronic component 17 mounted on the mounting surface of the circuit board 14 can be brought closer to the end face 15b, and the efficiency of dissipating heat generated by the electronic component 17 to the outside can be enhanced. A gap may be provided between the electronic component 17 and the end face 15b, the electronic component 17 and the end face 15b may be brought into contact with each other, or as shown in FIG. 6, the gap between the electronic component 17 and the end face 15b may be filled with a heat conduction member 16h such as heat dissipation grease, heat dissipation gel, and a heat dissipation sheet. By doing so, the heat dissipation efficiency can be further enhanced.

The fins 15 have tapered portions 15e and 15f, whereby the upward-downward length of the end 15d is shorter than the upward-downward length of the end 15c. The tapered portion 15e is an upper tapered portion of the fin 15. The tapered portion 15f is a lower tapered portion of the fin 15. The angle of the tapered portion 15e is desirably an angle corresponding to the angle of the windshield of the vehicle to which the stereo camera 10 is attached. The plurality of fins 15 have, at an upper part, the tapered portion 15e with high rear and low front.

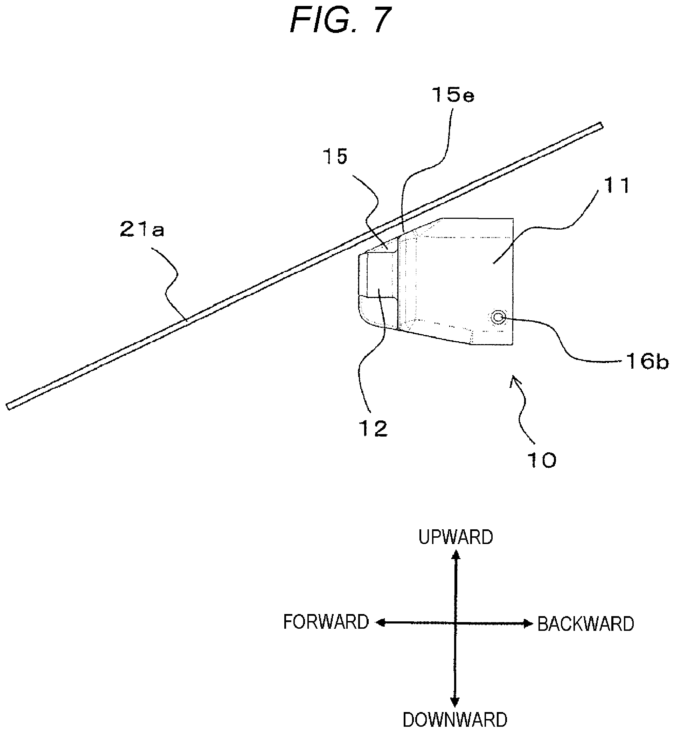

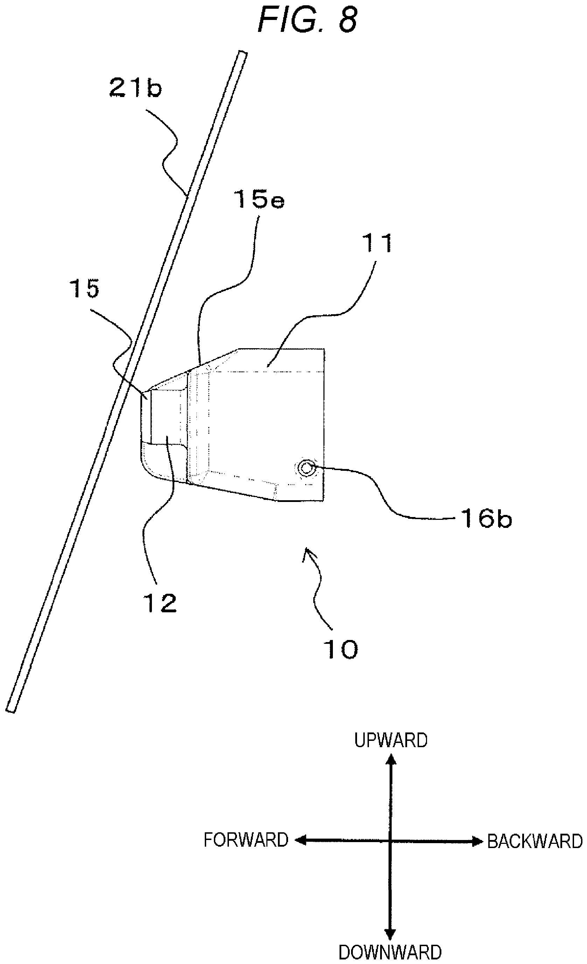

FIG. 7 is a side view showing an example of the positional relationship between the windshield of the vehicle and the stereo camera 10. FIG. 8 is a side view showing an example of the positional relationship between the windshield of the vehicle and the stereo camera 10 other than FIG. 7. The example of FIG. 7 shows a windshield 21a of the vehicle in a case where the type of vehicle is, for example, a sedan and the angle formed with horizon is about 30 degrees. The example of FIG. 8 shows a windshield 21b of the vehicle in a case where the type of vehicle is, for example, a truck and the angle formed with horizon is about 75 degrees.

As shown in FIG. 7, the angle formed with the horizon by the tapered portion 15e of the stereo camera 10 is the same as the angle formed with the horizon by the windshield 21a. That is, the tapered portion 15e and the windshield 21a are parallel to each other. According to this structure, the fins 15 are brought close to the windshield 21a, and the stereo camera 10 can be attached to the windshield 21a. By bringing the fins 15 close to the windshield 21a, it is possible to expect an anti-fogging effect by the exhaust heat transferred from the fins 15 to the windshield 21a.

The stereo camera 10 having the tapered portion 15e at an angle corresponding to the windshield 21a of FIG. 7 can be attached also to the windshield 21b having an angle formed with horizon larger than that of the windshield 21a, as shown in FIG. 8. By providing the tapered portion 15e, the stereo camera 10 can be attached to the windshield 21b without the fins 15 colliding with the windshield 21b. Since the fins 15 do not protrude forward of the lens 12 in the forward-backward direction, the lens 12 can be brought closer to the windshield 21b, and the lens 12 can be arranged so that the angle of view of the lens 12 is within the wiper wiping area.

Note that the present invention is not limited to the above-described embodiment and includes various modifications. For example, the above-described embodiment has been described in detail for easy-to-understand explanation of the present invention, and is not necessarily limited to those including all the described configurations. It is possible to replace a part of the configuration of one embodiment with that of the configuration of another embodiment, and it is also possible to add the configuration of another embodiment to the configuration of one embodiment. The configuration of another embodiment can be added to, deleted from, or replaced with a part of configuration of each embodiment.

### Reference Signs List

- 10: stereo camera
- 11: housing
- 12: lens
- 13: image-capturing element
- 14: circuit board
- 15: fin
- 16a, 16b, 16c: held portion

- 17: electronic component

## Claims

1. A stereo camera, comprising:
a plurality of image-capturing units;
a housing that accommodates the plurality of image-capturing units; and
a circuit board mounted with an electronic component,
wherein
the housing has a seat continuous to a heat dissipation unit,
the seat has an end face on a side opposite to a side of the heat dissipation unit,
the end face is a plane parallel to an upward-downward direction, and
a mounting surface of the circuit board mounted with the electronic component is a plane parallel to an upward-downward direction.

2. The stereo camera according to claim 1, wherein
the heat dissipation portion is a plurality of fins extending from the seat, and
the end face is a plane of the seat of an opposite side of a side where the plurality of fins extend.

3. The stereo camera according to claim 2, wherein
the end face is a plane orthogonal to an optical axis of the image-capturing unit,
the mounting surface is a plane orthogonal to an optical axis of the image-capturing unit, and
the end face is a plane facing the mounting surface.

4. The stereo camera according to claim 3, wherein a heat conduction member is arranged between the end face and the electronic component mounted on the mounting surface.

5. The stereo camera according to claim 4, wherein the heat conduction member is heat dissipation grease.

6. The stereo camera according to claim 2, wherein the plurality of fins are arranged at positions not overlapping angles of view of the plurality of image-capturing units.

7. The stereo camera according to claim 6, wherein in a forward-backward direction, front tips of the plurality of image-capturing units are positioned in a front direction relative to front tips of the plurality of fins.

8. The stereo camera according to claim 2, wherein the plurality of fins have, at least at an upper part, a tapered portion with high rear and low front.
